(19) Europäisches Patentamt
European Patent Office
Office européen des brevets

(11) Publication number: **0 454 323 B1**

(12) # EUROPEAN PATENT SPECIFICATION

(45) Date of publication of patent specification: **02.11.95**

(51) Int. Cl.6: **C07F 9/32**, C07F 9/50, C02F 5/14

(21) Application number: **91303204.1**

(22) Date of filing: **11.04.91**

(54) **Phosphinate oligomers, compositions containing them and methods of making and using them.**

(30) Priority: **25.04.90 US 514444**
**10.05.90 US 521627**

(43) Date of publication of application:
**30.10.91 Bulletin 91/44**

(45) Publication of the grant of the patent:
**02.11.95 Bulletin 95/44**

(84) Designated Contracting States:
**DE ES FR GB IT NL SE**

(56) References cited:
**DE-A- 2 725 199**
**US-A- 4 088 678**
**US-A- 4 445 983**
**US-A- 4 913 823**

(73) Proprietor: **NALCO CHEMICAL COMPANY**
**One Nalco Center**
**Naperville**
**Illinois 60563-1198 (US)**

(72) Inventor: **Kneller, James F.**
**925 Beach Avenue**
**LeGrange Park,**
**Illinois 60525 (US)**
Inventor: **Narutis, Vytas**
**390 Longcommon**
**Riverside,**
**Illinois 60546 (US)**
Inventor: **Fair, Barbara E.**
**732 73rd Street**
**Downers Grove,**
**Illinois 60516 (US)**
Inventor: **Johnson, Donald A.**
**1110 Crestview Drive**
**Batavia,**
**Illinois 60510 (US)**
Inventor: **Mazzani, Gianfranco F.**
**V. Caffaro 43**
**I-00154 Roma - RM (IT)**
Inventor: **Di Simone, I. Sergio**
**Via Ninfina II**
**04012 Cisterna**
**Di Latina (IT)**

(74) Representative: **Harrison, David Christopher et al**
**MEWBURN ELLIS**
**York House**
**23 Kingsway**
**London WC2B 6HP (GB)**

EP 0 454 323 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to compositions useful in prevention or inhibition of scale formation, especially in cooling water systems, and to methods of making and using them.

The term "cooling water" is applied wherever water is circulated through equipment to absorb and carry away heat. This includes air conditioning systems, engine jacket systems, refrigeration systems, as well as the multitude of industrial heat exchange operations, such as found in oil refineries, chemical plants and steel mills.

The once-through system, as the name implies, is one in which the water is passed through the heat exchange equipment and the cooling water is then discharged to waste. Usually, a once-through system is employed only where water at suitably low temperature is readily available in large volume and at low cost. The usual source of once-through cooling water is from wells, rivers, and lakes, where the cost involved is that of pumping only. In a once-through system, no evaporation takes place and consequently the water does not concentrate. Circulating water characteristics are the same as the makeup water.

The use of a recirculating system, in which a cooling tower, spray pond, evaporative condenser, and the like serve to dissipate heat, permits great economy in makeup water requirements. With dwindling supplies of fresh cold water available for industry's cooling requirements, increased use must be made of recirculating systems in which the cooling water is used over and over again. After passage of the circulating water through the heat exchange equipment, the water is cooled in passing over the cooling tower. This cooling effect is produced by evaporation of a portion of the circulating water in passing over the tower. By virtue of the evaporation which takes place in cooling, the dissolved solids and suspended solids in the water become concentrated.

The circulating water becomes more concentrated than the makeup water due to this evaporation loss. Cycles of concentration is the term employed to indicate the degree of concentration of the circulating water as compared with the makeup. For example, 2.0 cycles of concentration indicates the circulating water is twice the concentration of the makeup water.

The precipitation of calcium carbonate and calcium phosphate may form scale, particularly on heat exchange surfaces. In general, the term "scale" applies to deposits which result from crystallization or precipitation of salts from solution. Some of the factors which affect scale formation are temperature, rate of heat transfer, pH and alkalinity of the water, and concentration of ions including calcium, sulfate, magnesium, silica, and phosphate.

In the past, in order to minimize the formation of the scale forming salts, the cooling water systems were operated at pHs where the solubility of the "hardness" or "scale forming" ions was the greatest. Because the pHs of the systems were acidic, corrosion inhibitors, together with dispersants, were the normal treatment. With the advent of tight controls as regards toxic pollutant discharge, operating parameters of cooling water systems had to be changed in an attempt to utilize non-chromate treatment. The development of high pH and/or non-chromate corrosion programs over the past few years has concurrently enhanced the potential for heat exchange fouling due to chemical precipitation.

Most of the currently used scale preventative treatments include phosphate and/or phosphonic acid compounds such as the alkali metal polyphosphates, organo-phosphates, e.g., phosphate esters, etc., aminotrimethylene phosphonic acid, hydroxy ethylidene disphosphonic acid, and the water-soluble salts thereof.

Many of the organophosphorus compositions used as scale control agents are effective, but suffer from the drawback that they are relatively expensive to use. This is usually due to the costly synthetic methods used to produce them.

In the prior art relevant to the preparation and composition aspects of the invention, relatively inexpensive organophosphorus compositions are those disclosed in US-A-4,088,678. This patent purports to disclose a method for the preparation of monosodium phosphinicobis (succinic acid). It also purports to show this compound as possessing activity as a scale inhibitor. The same concepts are shown in more detail in its British counterpart, GB-A-1,512,440.

Both patents teach preparing a phosphinicobis (succinate) composition by reacting maleic acid with sodium hypophosphite in the presence of a water soluble initiator. The patents demonstrate that the optimum molar ratio of maleic acid to hypophosphite is 2.2. They clearly indicate that further excesses of the maleic acid do not result in an improved product.

The present invention is based on several discoveries which arose from investigating the experimental work described in the US and British patents. In the first instance, it was ascertained the products formed using a molar ratio of maleic acid: hypophosphite of 2.0 were, in fact, mixtures of products. An important discovery is that the active species that prevent scale formation are oligomers. Further, if the oligomeric

species are not present in the compositions, there is poor scale inhibition or chelation. Finally, the invention is based on the discovery that the yield of oligomeric species can be improved by increasing the molar amount of the maleic acid used in the preparative procedure.

In the presence of free-radical initiators, phosphorus compounds having at least one P-H linkage will react with unsaturated substrates to form various organo-phosphorus products. The nature of the product formed can be varied as a function of the number of reactive P-H bonds and stiochiometry of reagents, as referenced in:

Houben-Weyl, "Methoden der Organischen Chemie" 4th Ed., Vol. XII/I, Stuttgart, 1963, 228-229;

Bataafsche (Shell), "Process for the Production of Phosphorus-containing Organic Compounds and the Compounds so Produced", E.P. 660,918, 1949 [C.A. 46,8145 (1952)];

L.A. Hamilton, R.H. Williams, "Synthesis of Compounds having a Carbon-Phosphorus Linkage", U.S. 2,957,931, (1960); and

E.E. Nifant'ev, M.P. Koroteev, "Synthesis of Alkyl (Cycloalkyl) dichlorophosphines and their conversion into Derivatives of Phosphinic Acids", J. Gen. Chem. (U.S.S.R.) 37,1293 (1967) [C.A. 68,39739b].

US-A-2,724,718 also describes the preparation of organophosphorus compounds by reaction of olefinic substances with sodium hypophosphite or dialkyl phosphinates (HP (O) $(OR)_2$). Such reactions were conducted in alcohol in an autoclave at elevated temperatures (above 120 °C), employing free-radical initiators, such as peroxides.

The choice of initiator is not limited to peroxides and peroxyesters. Monoalkyl phosphinic acids (phosphonous acids) have also been prepared employing azo initiators, such as azobisisobutyronitrile, which is referenced in J.K. Thottathil's, "Process for preparing Phosphonous Acids", EP App. 246,015 (1987). These reactions were conducted in alcoholic solution, maintaining acidic conditions.

In the case of activated olefins, hypophosphorous acid could be made to react in the absence of catalyst. By prolonged heating of hypophosphorous acid with diethyl maleate (1:1 molar ratio) in ethanol, 1,2-dicarboethoxyethyl phosphinic acid was prepared, by A.N. Pudovik, T.M. Moshkina, I.V. Knovalova's, "New Method of Synthesis of Esters of Phosphinic and Thiophosphonic Acids XXXI. Addition of Phosphorous and Hypophosphorous Acids, Dialkyl Hydrogen Phosphites and Esters of Phosphonoacetic Acid to Esters of Maleic Acid", Zh. Obshsch. Khim. 29, 3338 (1959) [C.A. 54,15223g].

M.G. Imaev, I.S. Akhmetzhanov, I.V. Tikunova, I.I. Lyubarskaya, V.V. Rozhkova, T.M. Alakasandrova, "Phosphinosuccinic Acid Monoester Disalts", U.S.S.R. 376,388 (1973) [C.A. 79,53557z] also describes the reaction of the monoalkyl ester of maleic acid in a similar fashion. Formation of the free succinic acid or related salts were not disclosed. Conversion of the intermediate ester to phosphinico (mono) succinic acid would require subsequent hydrolysis of the intermediate ester. This is a costly and time-consuming process.

Dialkylphosphinic acids are typically isolated in poor yield (9-40%) from the peroxide catalyzed addition of hypophosphorous acid to terminal olefins. The desired bis-adduct could only be isolated by careful recrystallization of the product mixture, to separate this product from the monoalkylphosphinic acid. The preferred route was oxidation of di-n-alkylphosphine oxides, which is discussed in R.H. Williams and L.A. Hamilton's "Di-n-alkylphosphine Oxides. I. Synthesis", J. Am. Chem. Soc. 74:5418 (1952). These were prepared by Grignard reaction of magnesium alkyl halides (RMgX) with di-n-butyl phosphite.

Subsequent to the work described in US-A-4,088,678, another patent, US-A-4,445,983, describes the use of phosphinocarboxylic acids for sealing anodically produced oxide layers on aluminum and aluminum alloys. The materials were produced by reaction of hypophosphorous acid with unsaturated carboxylic acids, such as maleic, itaconic, and citraconic acids.

US-A-4,590,014 describes an "improved" method for the formation of alkali metal phosphinate salts. The process involves simultaneous addition of olefinic material and peroxide catalyst to an aqueous alcoholic solution of alkali metal hypophosphite salt. The composition of the mixed water/alcohol solvent system was such that the reaction temperature could be conveniently maintained at or slightly above the decomposition temperature of the free-radical initiator. These conditions favor formation of the monoalkyl phosphinate over competing side-reactions such as telomerization, double bond polymerization, or oxidation of hypophosphorous acids. By this process, sodium phosphinosuccinic acid dimethyl ester was prepared by addition of dimethyl maleate and t-butyl peroctoate to a solution of sodium hypophosphite in ethanol/water (2/1) at 80 °C over 4.5 hours.

One aspect of the present invention is based on the realisation that a phosphinicosuccinic acid oligomer having the structural formula (I):

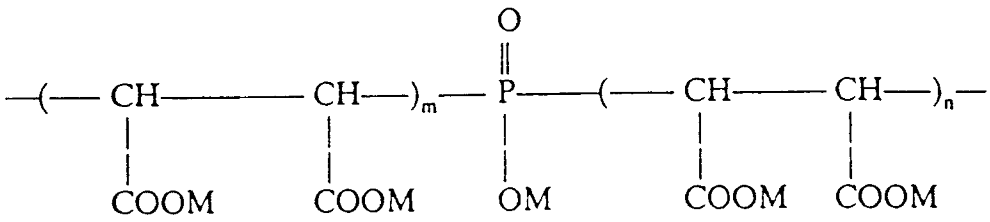

wherein M is one or more of H, Na, K and $NH_4$, and m and n are independently integers of 0 to 9, provided that

$$m + n > 2$$

may be used as a scale preventative or inhibitor.

In another aspect, the invention comprises a composition comprising:

| Ingredients | Mole Percent - Less Than |
|---|---|
| A. Monosodium phosphinicobis-(succinic acid) | 22 |
| B. Monosodium phosphinico-succinic acid | 26 |
| C. A phosphinicosuccinic acid oligomer having the structural formula (I): | |

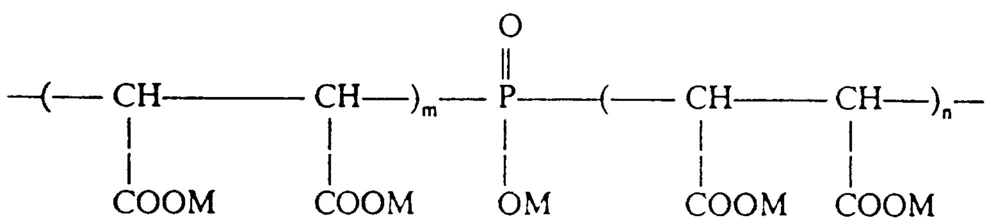

wherein C exceeds 32 mole percent, M is H, Na, K, $NH_4$, or mixtures thereof; and m and n are independently integers of 0 to 9 and the sum of m plus n is greater than 2.

Optionally the composition may further contain

| | Mole Percent-Less Than |
|---|---|
| D. Sodium phosphonosuccinic acid (optional) | 12 |
| E. Sodium phosphate (optional) | 5 |
| F. Sodium phosphite (optional) | 6 |
| G. Sodium hypophosphite | 6 |

In each case, total percentage being 100.

In a preferred embodiment of the composition C is about between 35-40 mole percent. In most instances, M will be one or more of H and Na.

Most preferably m and n are single digit numbers, i.e. up to 9.

Preferred molecular weights for the oligomer are in the region of 2,500 to 3,000, more preferably about 2,700, as determined by using polysaccharide standards on a gel permeation chromatography system.

The above structure (I) is considered to be probable, since due to the nature of the reactants, there is a possibility that a small amount would contain random phosphorus atoms in the chain. Also, it is known that

compounds related to the above oligomer tend to decarboxylate in the presence of strong oxidizing agents such as peroxides, or at low pH. It has been demonstrated that such decarboxylation can be minimized by neutralization of the final product or decomposition of residual oxidant at production.

One of the most surprising discoveries upon which the invention is predicated is that the active chelant or scale inhibitor is the oligomer. As will be shown hereafter, when compositions are prepared without oligomer present, they possess poor scale inhibiting properties.

As previously stated, the improved scale inhibiting compositions afforded by the invention should contain more than 32 mole percent of the oligomer. Higher oligomer content, e.g. between 35-40 mole percent, gives the best scale inhibition results. The preferred method of making the compositions with high oligomer contents seems to be limited to producing materials having an oligomer content not much greater than 40 mole percent.

In another aspect, the compositions containing substantial quantities of oligomer are obtainable by reacting a water soluble hypophosphite with and in the presence of an excess of maleic acid using a water soluble initiator at a temperature ranging between 50 °C-70 °C for a period of time ranging between four to eight hours with the molar ratio of maleic acid to water soluble hypophosphite being at least 2.5, but less than 3.

In a further aspect, the present invention provides a method as set out in claim 7.

Either hypophosphorous acid, alkali metal hypophosphites or other water soluble ammonium, alkali metal or amine hypophosphite salts may be used. By far the most preferred is sodium hypophosphite which is the most reactive yet, at the same time, is relatively inexpensive, and is readily available commercially.

The most preferred initiators are the water-soluble persulfates, particularly ammonium persulfate. It is possible to use other free-radical initiators such as the well-known inorganic peroxides and hydroperoxides. Also useful are the so-called Vazo initiators as well as certain bisulfites. In any event, it is necessary that the initiator be water-soluble. The amount of the initiator ranges from as little as 0.1 up to as much as 10%. A preferred range is 7.5%. These percentages are based on the weight of the reactants.

The reaction time may vary from between two to ten hours with good results being achieved within the range of four to eight hours.

While maleic acid is the preferred material, maleic anhydride, the water-soluble maleate salts such as the alkali metal, ammonium, or amine salts, as well as certain maleate esters also may be used. It is understood that the term maleic acid when used herein and in the claims is intended to include these equivalents. It should be noted that the anhydride under the conditions of the reaction will hydrolyze to the acid.

As indicated, the moles of maleic acid to the hypophosphite should be at least 2.5, but less than 3.

Products of the invention containing high percentages of oligomer are only capable of being produced when the maleic acid is in excess to the hypophosphite during the course of the reaction. When the maleic acid is added to the hypophosphite simultaneously with the initiator, poor yields of the oligomer are obtained. The preparative technique set forth in US-A-4,088,678 may be used. The compositions as produced are aqueous solutions containing between about 35-40 percent solids.

Whether and to what extent (up to the stated maximum) ingredients D-G are present in the product will depend on reaction conditions/proportions. Furthermore such ingredients or some of them may be removed from the product.

The compositions used in the scale inhibition methods of the invention are in the form of aqueous solutions which have been neutralized with a water-soluble base such as sodium hydroxide to prevent decarboxylation from occurring. These neutralized compositions usually will be neutralized to a pH of around 7-7.5.

While these compositions are capable of providing good scale protection in a variety of industrial areas, they are most effective in providing protection to the surfaces in contact with alkaline cooling waters. These waters are most often cooled by means of large atmospheric cooling towers. Such waters are treated so that their pHs are within the range of between 8.2-9.5. Higher or lower alkaline pHs can be found in certain systems.

The dosage at which the compositions provide scale protection will vary depending upon the environment at which they are used. Based on total solids of the compositions, the dosage can be varied between 0.1-500 ppm based on the water being treated. A typically preferred dosage range is between 2.5-100 ppm.

Example 1 - Preparative Technique

Maleic anhydride (306.25 g, 3.125 moles) briquettes were crushed and added to a 1.5 litre reaction flask along with about 516.9 g of water. The suspension was stirred for about fifteen (15) minutes as the maleic anhydride dissolved and hydrolyzed, raising the temperature of the solution from 21 °C to 32 °C. After stirring for forty-five (45) minutes longer, the mild exotherm began to subside and sodium hypophosphite monohydrate (132.5 g, 1.25 moles) was added. A second mild exotherm occurred as sodium hypophosphite dissolved. Nitrogen purging was begun and the reaction mixture was heated to 60 °C over thirty (30) minutes. Ammonium persulfate solution was added (99.75 g of a 37.22% aqueous solution) over about four hours. Temperature was controlled at 60 °C-61 °C using heating or cooling as needed. When addition of the catalyst was complete, heating at 60 °C was continued for two and one-half (2.5) hours longer. Heating was continued and incrementally increased to 80 °C until oxidant was consumed or destroyed, as indicated by a negative starch-iodide test. The clear, yellow solution was highly acidic (pH 1). The concentration of the final product before neutralization was 44.77% (assuming complete incorporation of maleic acid and sodium hypophosphite). Analysis of the reaction mixture was done using $^{31}P$ and $^{13}C$ NMR showing the absence of maleic acid in the final product mixture.

A sample (100.0 g of the 44.77% solution described above) was neutralized to pH 7.0 by dropwise addition of the 50% sodium hydroxide. Temperature of the solution was observed and maintained at 60 °C or less with ice-water bath cooling. The concentration of the resultant solution was 30.79% (calculated based on dilution).

Using the above preparative technique, as well as what may be referred to as a semi-batch procedure, in which the maleic acid was added simultaneously with APS initiator, a variety of product compositions were prepared. The results of these preparations are set forth in Table I. This table illustrates both comparative examples and examples falling within the present invention.

## TABLE I

### REACTIONS OF SODIUM HYPOPHOSPHITE WITH MALEIC ACID AND MALEATES

$^{31}$P NMR ANAL. Mole Percent Phosphorus Compound

| Sample Number | Mole Ratio Mal./Hypo | Procedure | 2:1 | OLIG | 1:1 | PSA | Other Phosphon | Resid. | Comments |
|---|---|---|---|---|---|---|---|---|---|
| 1 | 2.2:1 | Addn. of APS to M.A. & $NaH_2PO_2$ | 19.0 | 27.6 | 23.2 | 13.4 | 5.3 | 11.5 | |
| 2 | 2.2:1 | Addn. of APS to M.A. & $NaH_2PO_2$ | 18.6 | 26.2 | 37.4 | 6.2 | 2.0 | 9.6 | |
| 3 | 2.2:1 | Addn. of APS to M.A. & $NaH_2PO_2$ | 19.0 | 31.7 | 25.6 | 9.7 | 4.0 | 10.0 | |
| 4 | 2.2:1 | Addn. of APS to M.A. & $NaH_2PO_2$ | 21.9 | 32.9 | 25.9 | 8.9 | 3.6 | 6.8 | |
| 5 | 2.2:1 | Addn. of M.A. and APS to $NaH_2PO_2$ | 52.3 | 24.0 | 16.7 | 3.3 | 0.0 | 3.7 | |
| 6 | 2.0:1 | Addn. of M.A. and APS to $NaH_2PO_2$ | 49.6 | 15.1 | 31.0 | 1.5 | 1.0 | 2.8 | Unreacted M.A. in sample |
| 7 | 2.0:1 | Addn. of M.A. and APS to $NaH_2PO_2$ | 57.4 | 13.5 | 20.6 | 3.6 | 0.9 | 4.0 | |
| 8 | 2.5:1 | Addn. of M.A. and APS to $NaH_2PO_2$ | 53.6 | 14.2 | 25.8 | 1.7 | 0.0 | 4.7 | Unreacted M.A. in sample |

**TABLE I (continued)**

| Sample Number | Mole Ratio Mal./Hypo | Procedure | 2:1 | OLIG | 1:1 | PSA | Other Phosphon | Resid. | Comments |
|---|---|---|---|---|---|---|---|---|---|
| 9 | 2.5:1 | Addn. of APS to M.A. & $NaH_2PO_2$ | 17.6 | 40.5 | 22.0 | 9.0 | 4.9 | 6.0 | |
| 10 | 3.0:1 | Addn. of APS to M.A. & $NaH_2PO_2$ | 15.4 | 40.6 | 20.2 | 10.8 | 5.4 | 7.6 | Unreacted M.A. in sample |
| 11 | 2.0:1 | Addn. of APS and $NaH_2PO_2$ to M.A. | 14.8 | 27.2 | 31.4 | 3.5 | 6.1 | 17.0 | |
| 12 | 2.2/1.0 | Addn. of M.A. and APS to $NaH_2PO_2$ | 10.4 | 6.3 | 77.5 | 1.4 | 0.0 | 4.4 | Used Na maleate, some unreacted acid in sample |
| 13 | 2.0/1.0 | Addn. of Dimethyl maleate & t-butyl peroctoate to $NaH_2PO_2$ | 88.5 | 0.0 | 11.5 | 0.0 | 0.0 | 0.0 | EtOH + $H_2O$ solvent, ester saponified |
| 14 | 1.0/1.0 | Addn. of Dimethyl maleate & t-butyl peroctoate to $NaH_2PO_2$ | 8.1 | 0.0 | 73.8 | 0.0 | 0.0 | 18.1 | EtOH + $H_2O$ solvent, ester saponified |
| 15 | 1.0/1.0 | Addn. of M.A. and APS to $NaH_2PO_2$ | 12.8 | 0.0 | 67.1 | 0.0 | 0.0 | 20.1 | |
| 16 | 2.0/1.0 | Addn. of M.A. and V-50 to $NaH_2PO_2$ | 10.9 | 22.9 | 41.3 | 2.7 | 1.7 | 20.5 | |
| 17 | | Oxidation of Sample Nº 7 with $H_2O_2$ | 68.0 | 3.0 | 0.0 | 26.0 | 0.0 | 3.0 | Sample Nº 7 oxidized with $H_2O_2$ |

TABLE I

| GLOSSARY | |
|---|---|
| M.A. - | Maleic acid |
| APS = | Ammonium persulfate |
| Hypo = | sodium hypophosphite monohydrate |
| 2:1 = | Monosodium phosphinicobis (succinate) |
| OLIG = | Oligomeric phosphinicosuccinates |
| 1:1 = | Monosodium phosphinicosuccinate |
| V-50 = | 2,2'-azobis (2-amidopropane) hydrochloride |
| PSA = | Monosodium phosphonosuccinate |
| Other Phosphonics = | Unknown phosphonic compounds |
| Resid. = | Unreacted sodium hypophosphite and phosphorus acids |

Example 2: Evaluation as scale inhibitors

Several of the compositions set forth in the above table were evaluated as scale inhibitors using the following test method, referred to as the DEAL technique, i.e. the Dynamic Equilibrium Alkalinity Limit ("DEAL").

The apparatus is a recirculating system with a stainless steel heat transfer surface, outfitted with an automatic sampling system. The concentration of the ionic species is increased by evaporative water loss over a period of twenty-four (24) hours. On the basis of the chloride concentration, the cycles of concentration are determined. By comparison of the observed soluble (filtered) calcium concentration with the theoretical concentration of calcium, an index of precipitation can be evaluated.

Two parameters are employed to characterize performance. The area of deviation between the theoretical and observed soluble calcium levels is integrated, as a measure of the total amount of precipitation. In addition, the maximum number of cycles which can be obtained before precipitation occurs characterizes inhibitor performance. A model has been developed to predict the potential $CaCO_3$ precipitation as a function of increasing concentration under the conditions of the test. The maximum $CaCO_3$ concentration where 95% of this precipitation has been inhibited is reported as the second measurement of the inhibitor's performance.

Using the DEAL method described above, the following test results were obtained and are set forth in Table II.

TABLE II

| $CaCO_3$ Scale Inhibition for Phosphinico- and Phosphonosuccinate Mixtures | | | |
|---|---|---|---|
| Sample Number | Mole % Oligomer | Precipitation Area[1] | Max $CaCO_3$ Inhibition[2] (mg/l) |
| 15 | 0 | 307 | <268 |
| 13 | 0 | 306 | <273 |
| 17 | 3 | 164 | 342 |
| 7 | 14 | 148 | 352 |
| 3 | 32 | 78 | 374 |
| 9 | 40 | 60 | 393 |

[1]In this Table, Precipitation Area means a computation of $CaCO_3$ precipitated during the test (for twenty [20] hours) while concentrating the initial water to two cycles. The lower the value, the more effective is the inhibitor

[2]Max $CaCO_3$ inhibition means the maximum calcium carbonate concentration where 95% of potential precipitation has been inhibited. The higher the value, the more effective is the inhibitor.

It is evident from a study of the data in Table II that unless the oligomer is present in the composition, there is poor scale inhibition. As a corollary, as the oligomer content increases, the scale inhibition

increases.

Example 3: Optimization of effects in cooling systems

When the oligomeric phosphinicosuccinic acid compound content is maximized, $CaCO_3$ inhibition activity of this mixture is equal to or better than the commercial low molecular weight polyacrylic acid, Goodrite K-752. This conclusion is reported in Table III.

TABLE III

CaCO$_3$ Scale Inhibition for Phosphinico- and Phosphonosuccinates

Supersaturation - Titration Results[1]

| Sample Number | Mole % Oligomer | TITRATION DATA FOR SATURATION RATIOS DOSAGES 5 ppm | 10 ppm | 15 ppm |
|---|---|---|---|---|
| 9 | 40 | 85.4 | 116.8 | 119.9 |
| 3 | 32 | 69.9 | 107.5 | 119.9 |
| 7 | 14 | 39.9 | 65.2 | 91.1 |
| Goodrite K-752 | -- | 80.0 | 113.7 | 128.9 |

Test Conditions: 360 ppm Ca as $CaCO_3$
200 ppm Mg as $CaCO_3$
500 ppm $HCO_3$ as $CaCO_3$
Temperature - 60° C.
Stirring Rate - 300 rpm

---

[1]Solution of $Ca^{+2}$, $Mg^{++}$, $HCO_3$, and inhibitor are titrated with NaOH until supersaturation pH point for $CaCO_3$ precipitation is exceeded.

[2]Saturation Ratio - Ratio for number of times saturation point for $CaCO_3$ in test water is exceeded in presence of inhibitor test conditions. Higher values indicate better performance.

The compositions after neutralization are concentrated solutions containing substantial quantities of the oligomer and having a nearly neutral pH. These solutions may be used alone to prevent or to remove scale, but in many instances it is desirable to combine them with other treatments to provide a more versatile product.

Thus, they may be combined with other scale inhibitors and/or dispersants such as the low molecular weight polyacrylic acids. They may be combined with corrosion inhibitors such as the inorganic molecularly

dehydrated phosphates. Similarly, they can be fortified with scale inhibiting organophosphonates to provide products having synergistic properties.

The oligomer-containing compositions described, in addition to preventing scale, have the potential for dispersing scale-forming components in scale-forming waters. This is so since the oligomers are low molecular weight and polymeric in nature. Also, they should be capable of removing existing scale when it is present on equipment surfaces, particularly heat transfer surfaces. When this use of composition is contemplated, high dosages should be employed.

## Claims

**1.** A composition comprising A, B and C:

| Ingredients | Mole Percent |
|---|---|
| A. Monosodium phosphinicobis-(succinic acid) | less than 22 |
| B. Monosodium phosphinicosuccinic acid, and | less than 26 |
| C. A phosphinicosuccinic acid oligomer having the structural formula (I): | greater than 32 |

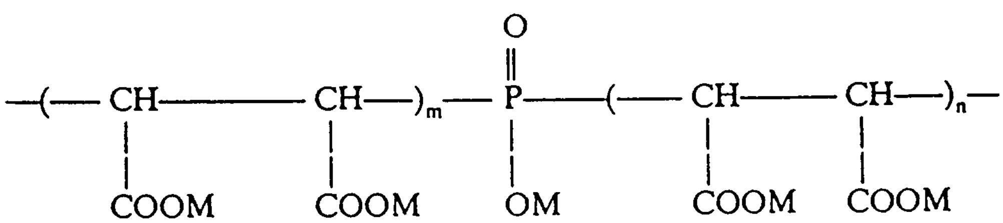

wherein M is one or more of H, Na, K, and $NH_4$, and m and n are independently integers of 0 to 9 with the proviso that the sum of m plus n is greater than 2,

the total percentage of the composition being 100.

**2.** A composition according to claim 1 additionally comprising at least one of D, E, F and G:

| | |
|---|---|
| D. Sodium phosphonosuccinic acid | less than 12 |
| E. Sodium phosphate | less than 5 |
| F. Sodium phosphite | less than 6 |
| G. Sodium hypophosphite. | less than 6 |

with the proviso that the total percentage of the composition is 100.

**3.** A composition according to claim 1 where C is 35-40 mole percent.

**4.** A composition according to claim 1 or claim 2 where M is one or more of H and Na.

**5.** A composition comprising A, B and C:

| Ingredients | Mole Percent |
|---|---|
| A. Monosodium phosphinicobis-(succinic acid)<br>B. Monosodium phosphinicosuccinic acid, and<br>C. A phosphinicosuccinic acid oligomer, | less than 22<br>less than 26<br>greater than 32 |

the total percentage being 100, obtainable by reacting a water-soluble hypophosphite with and in the presence of an excess of maleic acid, anhydride, salts or esters using a water-soluble initiator at a temperature ranging between 50°C-70°C for a period of time ranging between four (4) to eight (8) hours with the molar ratio of maleic acid to water-soluble hypophosphite being at least 2.5 but less than 3.

6. A composition according to claim 5 wherein ammonium persulfate was added to the maleic acid and hypophosphite during the course of the reaction.

7. A method for producing the composition of claim 5 which comprises reacting a water-soluble hypophosphite with and in the presence of an excess of maleic acid, anhydride, salts or esters using a water-soluble initiator at a temperature ranging between 50°C-70°C for a period of time ranging between four (4) to eight (8) hours with the molar ratio of maleic acid to water-soluble hypophosphite being at least 2.5, but less than 3, and wherein ammonium persulfate is added to the maleic acid and hypophosphite during the course of the reaction.

8. A method of preventing or inhibiting scale deposition from an aqueous medium which consists of adding to the medium a composition as claimed in any one of claims 1 to 6.

9. A method according to claim 8 wherein the aqueous medium is alkaline cooling water.

10. The use of a composition as claimed in any one of claims 1 to 6, as a scale-deposition inhibitor or preventer.

**Patentansprüche**

1. Zusammensetzung, umfassend A, B und C:

| Bestandteile | Mol-% |
|---|---|
| A. Mononatrium-phosphinicobis(bernsteinsäure) | unter 22 |
| B. Mononatrium-phosphinicobernsteinsäure | unter 26 |
| C. ein Phosphinicobernsteinsäure-Oligomer der Strukturformel (I): | über 32 |

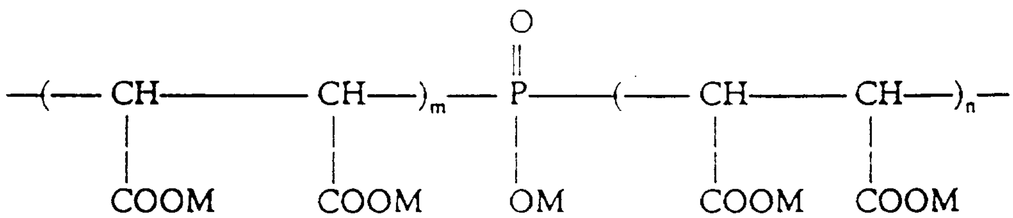

worin M eines oder mehrere von H, Na, K und $NH_4$ ist, sowie n und m voneinander unabhängige ganze Zahlen von 0 bis 9 sind, vorausgesetzt, daß die Summe von m + n größer als 2 ist,
wobei die Zusammensetzung insgesamt aus 100% besteht.

**2.** Zusammensetzung nach Anspruch 1, die zusätzlich zumindest eines von D, E, F und G umfaßt:

| | |
|---|---|
| D. Natriumphosphonobernsteinsäure | unter 12 |
| E. Natriumphosphat | unter 5 |
| F. Natriumphosphit | unter 6 |
| G. Natriumhypophosphit | unter 6 |

wobei die Zusammensetzung insgesamt aus 100% besteht.

**3.** Zusammensetzung nach Anspruch 1, worin C zu 35 - 40 Mol-% enthalten ist.

**4.** Zusammensetzung nach Anspruch 1 oder 2, worin M eines oder mehrere von H und Na ist.

**5.** Zusammensetzung, umfassend A, B und C:

| Bestandteile | Mol-% |
|---|---|
| A. Mononatrium-phosphinicobis(bernsteinsäure) | unter 22 |
| B. Mononatrium-phosphinicobernsteinsäure | unter 26 |
| C. ein Phosphinicobernsteinsäure-Oligomer | über 32 |

wobei die Zusammensetzung insgesamt aus 100% besteht, die durch Umsetzung eines wasserlöslichen Hypophosphits mit und in Gegenwart von einem Überschuß an Maleinsäure, -anhydrid, -salzen oder -estern unter Verwendung eines wasserlöslichen Initiators bei einer Temperatur im Bereich von 50 - 70 °C über einen Zeitraum von vier (4) bis acht (8) Stunden, wobei das Molverhältnis von Maleinsäure zum wasserlöslichen Hypophosphit zumindest 2,5, jedoch weniger als 3 beträgt, erhalten werden kann.

**6.** Zusammensetzung nach Anspruch 5, worin der Maleinsäure und dem Hypophosphit im Verlauf der Reaktion Ammoniumpersulfat zugesetzt wurde.

**7.** Verfahren zur Herstellung der Zusammensetzung nach Anspruch 5, umfassend die Umsetzung eines wasserlöslichen Hypophosphits mit und in Gegenwart von einem Überschuß an Maleinsäure, -anhydrid, -salzen oder -estern unter Verwendung eines wasserlöslichen Initiators bei einer Temperatur im Bereich von 50 - 70 °C über einen Zeitraum von vier (4) bis acht (8) Stunden, wobei das Molverhältnis von Maleinsäure zum wasserlöslichen Hypophosphit zumindest 2,5, jedoch weniger als 3 beträgt und worin der Maleinsäure und dem Hypophosphit im Verlauf der Reaktion Ammoniumpersulfat zugesetzt wird.

**8.** Verfahren zur Verhinderung oder Hemmung von Kesselsteinablagerung aus einem wäßrigen Medium, das aus der Zugabe einer Zusammensetzung nach irgendeinem der Ansprüche 1 - 6 zum Medium besteht.

**9.** Verfahren nach Anspruch 8, worin das wäßrige Medium alkalisches Kühlwasser ist.

**10.** Verwendung einer Zusammensetzung nach irgendeinem der Ansprüche 1 - 6 zur Hemmung oder Verhinderung von Kesselsteinablagerung.

## Revendications

**1.** Composition comprenant A, B et C :

| Ingrédients | Pourcent mole |
|---|---|
| A. Monosodium phosphinicobis-(acide succinique) | moins de 22 |
| B. Monosodium phosphinico-acide succinique, et | moins de 26 |
| C. Un oligomère d'acide phosphinicosuccinique ayant la formule structurelle (I) | plus de 32 |

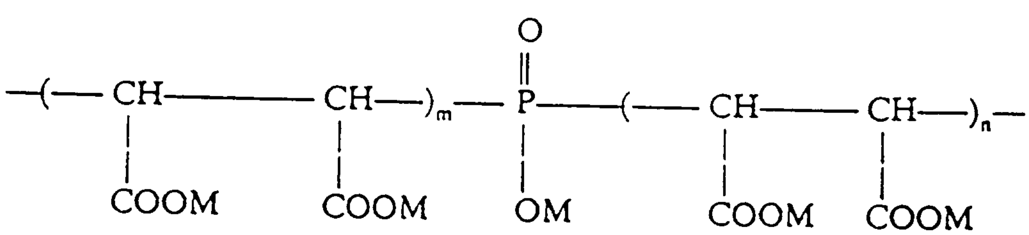

où M est l'un ou plus parmi H, Na, K et $NH_4$, et m et n sont indépendamment des entiers de 0 à 9 à condition que la somme de m plus n soit supérieure à 2,

le pourcentage total de la composition étant 100.

**2.** Composition selon la revendication 1 comprenant additionnellement l'un de D, E, F et G :

| | |
|---|---|
| D. Acide sodium phosphonosuccinique | moins de 12 |
| E. Phosphate de sodium | moins de 5 |
| F. Phosphite de sodium | moins de 6 |
| G. Hypophosphite de sodium | moins de 6 |

avec la condition que le pourcentage total de la composition soit 100.

**3.** Composition selon la revendication 1 où C est de 30 à 40% en mole.

**4.** Composition selon la revendication 1 ou 2 où M est l'un ou plus de H et Na.

**5.** Composition comprenant A, B et C

| Ingrédients | Pourcent mole |
|---|---|
| A. Monosodium phosphinicobis-(acide succinique)<br>B. Monosodium phosphinico-(acide succinique), et<br>C. Un oligomère d'acide phosphinicosuccinique | moins de 22<br>moins de 26<br>plus de 32 |

le pourcentage total valant 100, qui peut être obtenu par réaction d'un hypophosphite soluble dans l'eau avec et en présence d'un excès d'acide maléique, d'anhydryde, de sels ou d'esters en utilisant un iniateur soluble dans l'eau à une température dans l'intervalle entre 50 °C et 70 °C pendant une période de temps dans l'intervalle de quatre (4) à huit (8) heures avec le rapport molaire d'acide maléique à l'hypophosphite soluble dans l'eau valant au moins 2,5 mais étant inférieur à 3.

**6.** Composition selon la revendication 5 où le persulfate d'ammonium a été ajouté à l'acide maléique et à l'hypophosphite pendant la réaction.

**7.** Méthode pour produire la composition selon la revendication 5 qui comprend la réaction d'un hypophosphite soluble dans l'eau avec et en présence d'un excès d'acide maléique, d'anhydryde, de sels ou d'esters en utilisant un initiateur soluble dans l'eau à une température dans l'intervalle entre 50 °C et 70 °C pendant une période de temps dans l'intervalle entre quatre (4) et huit (8) heures avec le rapport molaire d'acide maléique à l'hypophosphite soluble dans l'eau valant au moins 2,5 mais étant inférieur à 3, et où le persulfate d'ammonium est ajouté à l'acide maléique et à l'hypophosphite pendant le cours de la réaction.

**8.** Méthode pour prévenir ou inhiber le dépôt de tartre provenant d'un milieu aqueux qui consiste à ajouter au milieu une composition telle que revendiquée dans l'une quelconque des revendications 1 à 6.

**9.** Méthode selon la revendication 8 où le milieu aqueux est de l'eau de refroidissement alcaline.

**10.** Utilisation d'une composition telle que revendiquée dans l'une quelconque des revendications 1 à 6, en tant qu'inhibiteur ou agent de prévention de dépôt de tartre.